# EUROPEAN PATENT APPLICATION

(11) **EP 3 633 637 A1**
(43) Date of publication of application: **08.04.2020**
(21) Application number: 19198654.6
(22) Date of filing: 20.09.2019
(51) Int. Cl.: G07G 1/00, G06Q 20/20

(54) **SHOPPING SUPPORT SYSTEM AND INFORMATION PROCESSING APPARATUS THEREIN**

(30) Priority: 01.10.2018 JP 2018186482
(71) Applicant: Toshiba Tec Kabushiki Kaisha, 141-8562 Tokyo (JP)
(72) Inventor: OKAMURA, Atsushi, Shinagawa-ku,, Tokyo 141-8562 (JP)
(74) Representative: Bandpay & Greuter

(57) **Abstract**

A shopping support system includes a plurality of mobile terminals each including a display, a network interface, and a processor configured to perform registration of one or more commodities to be purchased, and control the display to display a first list of the registered commodities. The processor is further configured to control the network interface to transmit to another mobile terminal a request for a second list of one or more commodities registered by said another mobile terminal, upon receipt of the second list, determine whether a first commodity included in the second list is also included in the first list, and upon determining that the first commodity is included in the first list, control the display to update the displayed first list such that the first commodity is distinguished from the other commodities included in the first list.

## Description

### FIELD

Embodiments described herein relate generally to a shopping support system and an information processing apparatus in the system.

### BACKGROUND

In a large retail store, such as a supermarket, a plurality of customers such as parents and children living together separately walk around in the store and pick up from store shelves various commodities including a commodity to be shared by them.

In such a case, it may happen that each customer may pick up the same or similar commodities for the same purpose at the same time. If the customers confirm the commodities to be purchased together before checkout, unnecessary purchase can be prevented. However, it takes time and is tiresome for the customers to put the commodity back to the original place. If the customers do not confirm the commodities, unnecessary purchase may occur.

For these reasons, it is desirable that a customer can recognize commodities that have been picked up by a member of his or her group before registration of the commodities.

### SUMMARY OF INVENTION

To solve such problem, there is provided a shopping support system comprising:
a plurality of mobile terminals each comprising: a display, a network interface, and a processor configured to perform registration of one or more commodities to be purchased, and control the display to display a first list of the registered commodities, wherein the processor is further configured to control the network interface to transmit to another mobile terminal a request for a second list of one or more commodities registered by said another mobile terminal, upon receipt of the second list, determine whether a first commodity included in the second list is also included in the first list, and upon determining that the first commodity is included in the first list, control the display to update the displayed first list such that the first commodity is distinguished from the other commodities included in the first list.

Preferably, the processor is further configured to: upon receipt of a request for the commodities registered thereby from another mobile terminal, control the display to display a screen on which an input for accepting the request is received, and upon acceptance of the request, transmit the first list to said another mobile terminal.

Preferably still, the processor is further configured to: after the first list is transmitted, upon further registration of one or more commodities, update the first list and transmit the updated first list to said another mobile terminal.

Preferably yet, the processor is further configured to: upon further receipt of a third list of one or more commodities registered by said another mobile terminal, determine whether a second commodity included in the third list is also included in the first list, and upon determining that the second commodity is included in the first list, control the display to update the displayed first list such that both the first and second commodities are distinguished from the other commodities included in the first list.

Suitably, the processor is further configured to: upon receipt of the second list, control the display to display both the first and second lists.

Suitably still, the processor is further configured to: upon receipt of the second list, control the display to display an amount of payment for the commodities included in each of the first and second lists.

Suitably yet, the system further comprises: a settlement apparatus configured to perform settlement for the registered commodities included in the first and second lists.

Typically, the processor is further configured to: control the display to display a user interface through which an instruction to start the settlement is received.

Typically still, the mobile terminals are each attached to a shopping cart.

Typically yet, the request includes a unique ID assigned to the shopping cart to which said another mobile terminal is attached.

The invention also relates to a method for controlling a shopping support system including a plurality of mobile terminals, the method comprising: performing registration of one or more commodities to be purchased; displaying a first list of the registered commodities; transmitting to another mobile terminal a request for a second list of one or more commodities registered by said another mobile terminal; upon receipt of the second list, determining whether a first commodity included in the second list is also included in the first list; and upon determining that the first commodity is included in the first list, updating the displayed first list such that the first commodity is distinguished from the other commodities included in the first list.

Preferably, the method further comprises: upon receipt of a request for the commodities registered thereby from another mobile terminal, displaying a screen on which an input for accepting the request is received, and upon acceptance of the request, transmitting the first list to said another mobile terminal.

Preferably still, the method further comprises: after the first list is transmitted, upon further registration of one or more commodities, updating the first list and transmitting the updated first list to said another mobile terminal.

Preferably yet, the method further comprises: upon further receipt of a third list of one or more commodities registered by said another mobile terminal, determining whether a second commodity included in the third list is also included in the first list, and upon determining that the second commodity is included in the first list, updating the displayed first list such that both the first and second commodities are distinguished from the other commodities included in the first list.

Suitably, the method further comprises: displaying the received second list together with the first list.

Suitably still, the method further comprises: upon receipt of the second list, displaying an amount of payment for the commodities included in each of the first and second lists.

Suitably yet, the method further comprises: performing settlement for the registered commodities included in the first and second lists.

Typically, the method further comprises: displaying a user interface through which an instruction to start the settlement is received.

Typically still, the mobile terminals are each attached to a shopping cart.

The invention also relates to a mobile terminal comprising: a display; an input device; a network interface; and a processor configured to perform registration of one or more commodities to be purchased, control the display to display a first list of the registered commodities, upon receipt of an input from a user of the mobile terminal, control the network interface to transmit to another mobile terminal a request for a second list of one or more commodities registered by said another mobile terminal, upon receipt of the second list, determine whether a first commodity included in the second list is also included in the first list, and upon determining that the first commodity is included in the first list, control the display to update the displayed first list such that the first commodity is distinguished from the other commodities included in the first list.

The invention further relates to a computer program comprising instructions which, when the program is executed by a computer, cause the computer to carry out the steps of the method described above.

The invention further concerns a computer-readable medium having stored thereon the computer program above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram illustrating a commodity sales system according to an embodiment;
Fig. 2 is a schematic view of a layout of a retail store to which the commodity sales system shown in Fig. 1 is introduced;
Fig. 3 is a diagram schematically illustrating a data record included in a commodity list;
Fig. 4 is a block diagram illustrating a circuit configuration of a server in Fig. 1;
Fig. 5 is a block diagram illustrating a circuit configuration of a checkout apparatus in Fig. 1;
Fig. 6 is a block diagram illustrating a circuit configuration of an information processing apparatus;
Figs. 7-9 depict a flowchart of information processing executed by the information processing apparatus in Fig. 6;
Fig. 10 is a diagram illustrating a list screen displayed on the information processing apparatus in an unlinked state;
Fig. 11 is a diagram illustrating a list screen displayed on the information processing apparatus in a linked state;
Fig. 12 is a diagram illustrating a modified list screen displayed on the information processing apparatus in the linked state; and
Fig. 13 is a diagram illustrating another modified list screen displayed on the information processing apparatus in the linked state.

### DETAILED DESCRIPTION

In accordance with an embodiment, a shopping support system includes a plurality of mobile terminals each including a display, a network interface, and a processor configured to perform registration of one or more commodities to be purchased, and control the display to display a first list of the registered commodities. The processor is further configured to control the network interface to transmit to another mobile terminal a request for a second list of one or more commodities registered by said another mobile terminal, upon receipt of the second list, determine whether a first commodity included in the second list is also included in the first list, and upon determining that the first commodity is included in the first list, control the display to update the displayed first list such that the first commodity is distinguished from the other commodities included in the first list.

Hereinafter, a commodity sales system, in which a customer operates an information processing apparatus to register a commodity that the customer has picked up as a commodity to be purchased and the customer operates a checkout apparatus to perform settlement of the registered commodity, is described with reference to the accompanying drawings. A commodity sales system descried below also has a function as a shopping support system capable of supporting shopping in a situation in which, for example, two customers who have a mutual relation with one the other separately pick up from a sales floor same or similar commodities subject to a single settlement.

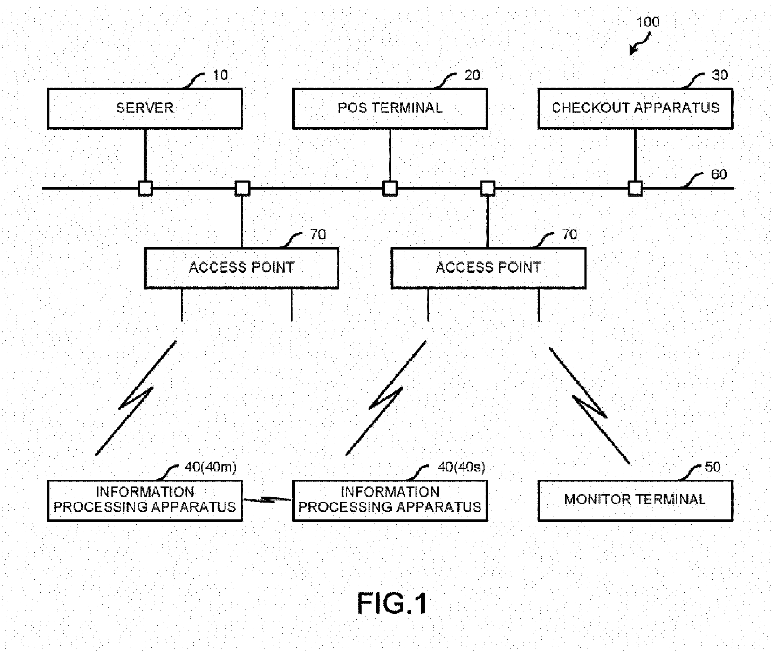

Fig. 1 shows a configuration of a commodity sales system 100 according to one embodiment.

The commodity sales system 100 includes a server 10, a POS (Point-Of-Sale) terminal 20, a checkout apparatus 30, an information processing apparatus 40, a monitoring terminal 50, a communication network 60 and an access point 70. In Fig. 1, one POS terminal 20, one checkout apparatus 30 and one monitoring terminal 50 are shown, and two information processing apparatuses 40 and two access points 70 are shown, but the number thereof is not limited. In most cases, a plurality of POS terminals 20 and a plurality of checkout apparatuses 30 are included in the commodity sales system 100. However, the commodity sales system 100 is not necessarily provided with the POS terminal 20 and the monitoring terminal 50. In most cases, a plurality of information processing apparatuses 40 is included in the commodity sales system 100. In the commodity sales system 100, the server 10, the POS terminal 20, the checkout apparatus 30, the information processing apparatus 40 and the monitoring terminal 50 communicate with one another via the communication network 60. However, the information processing apparatus 40 is connected to the communication network 60 via the access point 70 through wireless communication with the access point 70. It is desirable that the access point 70 is arranged in the store in such a manner that the information processing apparatuses 40 positioned anywhere in the sales floor of the retail store can communicate with any one of the access points 70.

The server 10, the POS terminal 20, the checkout apparatus 30 or the monitoring terminal 50 may be connected to the communication network 60 via the access point 70 through wireless communication with the access point 70. The information processing apparatuses 40 can also communicate directly with each other. The server 10 may not necessarily be connected to the communication network 60. For example, the Internet may be connected to the communication network 60 via a gateway, and the server 10 may be connected to the Internet. The functions of the server 10 may be performed by a distributed processing by a plurality of servers. In this case, the plurality of servers that performs the distributed processing is not necessarily connected to the communication network 60, and the servers linked to perform an information processing can communicate with each other in some way.

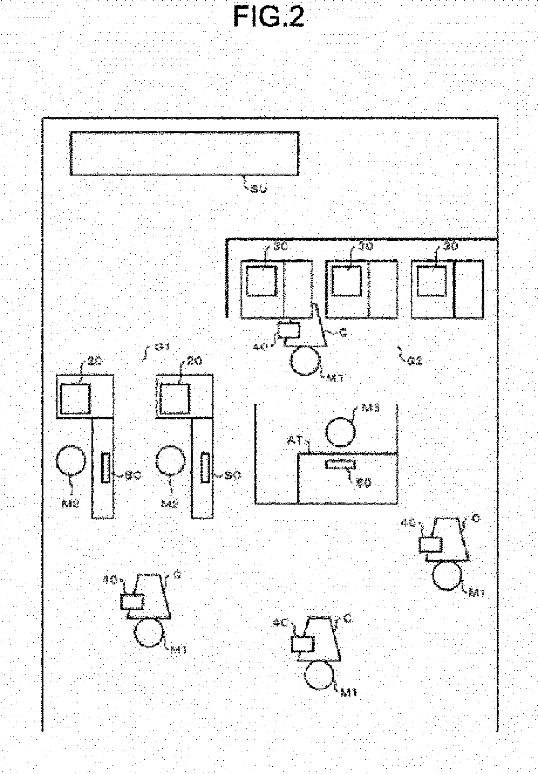

Fig. 2 is a schematic view illustrating a layout of a retail store to which the commodity sales system 100 is introduced.

The information processing apparatus 40 is operated by a customer M1, acting as a temporary operator, who is shopping in the retail store. The information processing apparatus 40 is mounted on, for example, a shopping cart (hereinafter, simply referred to as a cart) C. The information processing apparatus 40 may be carried by the customer M1. The information processing apparatus 40 may be, for example, an existing portable information processing apparatus such as a tablet computer, a smartphone, a smart watch or the like. The information processing apparatus 40 may be an apparatus prepared in the retail store to be temporarily used by the customer M1, or may be an apparatus possessed by the customer M1. The customer M1 pushes the cart C, goes around the sales floor, and puts a commodity to be purchased directly in the cart C, or puts the commodity in a basket housed in the cart C. At this time, the customer M1 operates the information processing apparatus 40 to perform an operation for registering the commodity in the cart C as a commodity to be purchased. The information processing apparatus 40 registers the commodity as the purchased commodity in response to such an operation. Then, the information processing apparatus 40 generates data indicating a list of the commodities to be purchased(hereinafter, referred to as a commodity list). The commodity list may be in any data form as long as it can identify each of the registered commodities. However, the commodity list contains at least a commodity code, and further contains a quantity of the commodity corresponding to the commodity code in some cases. The commodity list may contain any other information relating to the commodity, such as a commodity name and unit price. When the customer M1 finishes selecting all the commodities he/she intends to purchase, he/she goes to a checkout zone G2 to pay for the commodities. Thereafter, the customer M1 puts the commodities in a shopping bag on a packing table SU as needed.

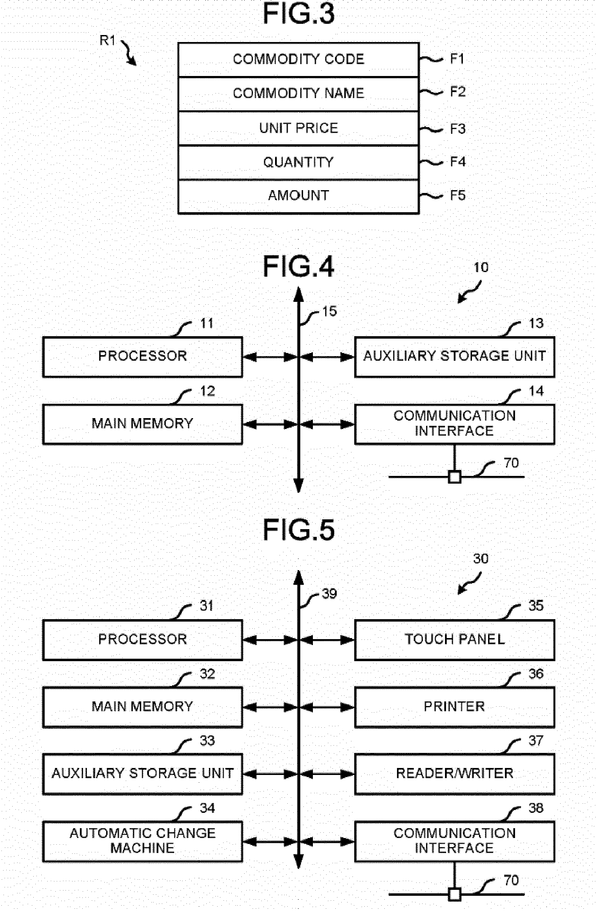

Fig. 3 is a diagram schematically illustrating a data record included in the commodity list.

The commodity list is a set of a plurality of data records R1 respectively associated with the purchased commodities. The data record R1 includes fields F1, F2, F3, F4 and F5. However, if one commodity is purchased, the commodity list includes only one data record R1.

Data indicating a commodity code for identifying the associated commodity is set in the field F1. Data indicating a name of the associated commodity is set in the field F2. Data indicating a unit price of the associated commodity is set in the field F3. Data indicating the number of associated commodities registered as the purchased commodities is set in the field F4. Data indicating an amount obtained by multiplying the unit price of the associated commodity by the number thereof is set in the field F5. The data record R1 may not include a part or all of the fields F2 to F5. The data record R1 may also include a field in which any other data is set.

The commodity code and the commodity name are examples of information for the customer to identify the commodity. It is assumed that the data record R1 includes at least one of such information for the customer to identify the commodity.

For example, the field F4 may be omitted. In this case, if the same commodity is registered more than once, a plurality of data records R1 in which data indicating the same commodity code is set in the field F1 is included in the commodity list.

The POS terminal 20 is installed at the checkout zone G1. A stationary scanner SC is installed at the checkout zone G1. Instead of or in addition to the scanner SC, a hand-held scanner may be provided. When a cashier (i.e., a store clerk) M2 uses the scanner SC to scan barcodes attached to the commodities one by one, the POS terminal 20 registers the commodities identified by commodity codes indicated by the barcodes as the commodities to be purchased. When the store clerk M2 finishes registering all the purchased commodities in one transaction, the store clerk M2 instructs the POS terminal 20 to perform checkout. In response to such an instruction, the POS terminal 20 calculates the payment amount for the registered commodities and performs settlement in response to an operation performed by an operator through a mutual confirmation between the store clerk M2 and the customer M1 for the settlement. The settlement may be executed in cash, a credit card, electronic money, points, cash vouchers such as gift certificates, etc. The checkout zone G1 may be not provided in the retail store.

The checkout apparatus 30 is installed in the checkout zone G2. The checkout apparatus 30 acquires the commodity list from the information processing apparatus 40, and calculates the payment amount relating to the registered commodities shown in the commodity list based on the unit price of each of the registered commodities shown in a commodity master file. The commodity master file is a database, in which a commodity code, a name, a unit price and the like are recorded for each commodity sold in the retail store, for managing commodities. The commodity master file is generally stored in the server 10. The checkout apparatus 30 performs settlement on the payment amount in response to the operation performed by the customer M1. As described above, cash, a credit card, electronic money, and points are acceptable for the settlement.

An attendant counter AT is arranged in the vicinity of the checkout zone G2. As described above, in the retail store to which the commodity sales system 100 is introduced, the customer M1 can operate both the information processing apparatus 40 and the checkout apparatus 30 to perform all operations from the registration to the settlement of the commodities without the store clerk. Hereinafter, the structure and service described above is referred to as a cart POS service. However, at the time of providing such a cart POS service, a situation may occur in which intervention by the store clerk is necessary. For example, there is a case in which a specialized store clerk (e.g., a pharmacist) needs to provide information or explanation to the customer M1 who purchases a specified medicine. There is also a case in which a commodity with discounted price is registered at a regular price because input of information of a discount seal to the information processing apparatus 40 is forgotten. In the checkout apparatus 30, errors such as coin jamming and a receipt paper exhaustion may occur during the operation.

In order to be able to promptly cope with such problems, an attendant M3, i.e., a store clerk in charge of customer service, always resides at the attendant counter AT. The monitoring terminal 50 is installed on the attendant counter AT. The attendant M3 can monitor the states of the information processing apparatus 40 and the checkout apparatus 30 on the monitoring terminal 50.

Next, configurations of the server 10, the checkout apparatus 30 and the information processing apparatus 40 are described. The POS terminal 20 may be an existing POS terminal of a so-called face-to-face type. The monitoring terminal 50 is the same as an existing monitoring terminal used in an existing commodity sales system of a self-service type or a semi-self-service type. Therefore, the description of the configurations of the POS terminal 20 and the monitoring terminal 50 is omitted.

Fig. 4 is a block diagram illustrating a circuit configuration of the server 10.

The server 10 includes a processor 11, a main memory 12, an auxiliary storage unit 13, a communication interface 14 and a transmission line 15. The processor 11, the main memory 12, and the auxiliary storage unit 13 are connected to each other via the transmission line 15 to constitute a computer that executes an information processing for performing various functions of the server 10.

The processor 11 acts as a central component of the above-described computer. The processor 11 executes an information processing for performing various functions of the server 10 according to an operating system, middleware and information processing programs such as application programs. The processor 11 is, for example, a CPU (Central Processing Unit).

The main memory 12 includes a non-volatile memory area and a volatile memory area. The main memory 12 stores at least a part of the above-described information processing programs in the non-volatile memory area. The main memory 12 may also store data necessary for the processor 11 to execute a processing to control each section in the non-volatile memory area or the volatile memory area. The main memory 12 may also store the commodity master file. The main memory 12 uses the volatile memory area as a work area where data is appropriately rewritten by the processor 11. For example, the non-volatile memory area is a ROM (Read Only Memory). The volatile memory area is a RAM (Random Access Memory).

The auxiliary storage unit 13 acts as an auxiliary storage component of the computer. The auxiliary storage unit 13 is, for example, an EEPROM (Electric Erasable Programmable Read-Only Memory), an HDD (Hard Disc Drive), an SSD (Solid State Drive), or the like. The auxiliary storage unit 13 stores data used by the processor 11 to perform various kinds of processing and data generated in a processing performed by the processor 11. The auxiliary storage unit 13 may also store the above-described information processing program. The auxiliary storage unit 13 may also store the commodity master file.

The communication interface 14 performs data communication with each section connected to the communication network 60 in conformity with a predetermined communication protocol.

The transmission line 15 includes an address bus, a data bus, a control signal line and the like, to transmit data and control signals transmitted and received between the processor 11, the main memory 12, the auxiliary storage unit 13 and the communication interface 14.

Fig. 5 is a block diagram illustrating a circuit configuration of the checkout apparatus 30.

The checkout apparatus 30 includes a processor 31, a main memory 32, an auxiliary storage unit 33, an automatic change machine 34, a touch panel 35, a printer 36, a reader/writer 37, a communication interface 38 and a transmission line 39. The processor 31, the main memory 32, and the auxiliary storage unit 33 are connected to each other via the transmission line 39 to constitute a computer that executes an information processing for performing various functions of the checkout apparatus 30. The functions of the processor 31, the main memory 32, the auxiliary storage unit 33, the communication interface 38 and the transmission line 39 are similar to those of the processor 11, the main memory 12, the auxiliary storage unit 13, the communication interface 14 and the transmission line 15 of the server 10. Therefore, the description thereof is omitted.

The automatic change machine 34 receives coins and bills via insertion slots. The automatic change machine 34 also discharges coins and bills as a change.

The touch panel 35 includes a display device and a touch sensor. The display device displays a screen such as a GUI (Graphical User Interface) screen under the control of the processor 31. The display device may be, for example, a known device such as a color LCD (Liquid Crystal Display). The touch sensor is overlapped on a display surface of the display device. The touch sensor detects a touch position by an operator on the display surface of the display device, and transmits touch-position information to the processor 31. A well-known device can be used as a touch sensor. The printer 36 is, for example, a thermal printer or an impact dot printer, to issue a receipt or a voucher by printing various character strings and images on a receipt paper.

The reader/writer 37 reads data recorded on a recording medium such as a card or an IC (Integrated Circuit) chip. The reader/writer 37 writes data to the above recording medium. The cards may include various cards for recording information relating to the settlement processing, such as a membership card and a point card, in addition to cards for settlement such as the credit card, the debit card, the electronic money card, the prepaid card and the like. The IC chip may be provided in an information terminal such as a smartphone, in addition to various cards described above. The reader/writer 37 may be any one of a magnetic type device, a contact type device or a non-contact type device, and may include a plurality of types of devices.

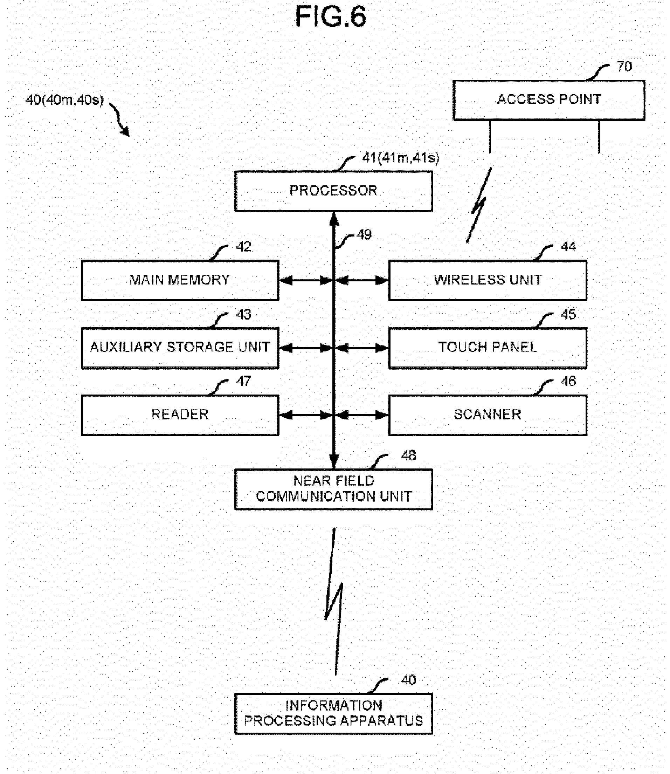

Fig. 6 is a block diagram illustrating a circuit configuration of the information processing apparatus 40.

The information processing apparatus 40 comprises a processor 41, a main memory 42, an auxiliary storage unit 43, a wireless unit 44, a touch panel 45, a scanner 46, a reader 47, a near field communication unit 48 and a transmission line 49. The processor 41, the main memory 42 and the auxiliary storage unit 43 are connected to each other via the transmission line 49 to constitute a computer that executes an information processing for performing various functions of the information processing apparatus 40. The functions of the processor 41, the main memory 42, the auxiliary storage unit 43, the touch panel 45 and the transmission line 49 are similar to those of the processor 11, the main memory 12, the auxiliary storage unit 13, the touch panel 35 and the transmission line 15 of the server 10, and thus, the description thereof is omitted.

The wireless unit 44 performs data communication with each section connected to the communication network 60 through wireless communication with the access point 70 in conformity with a predetermined wireless communication protocol. As the wireless unit 44, for example, an existing wireless unit conforming to the IEEE 802.11 standard can be used.

The scanner 46 has a camera serving as an image capturing section, to scan a code symbol such as a barcode or a two-dimensional data code from an image captured by the camera.

The reader 47 reads data such as a member ID recorded on the recording medium. Therefore, the reader 47 is a magnetic card reader if the recording medium is a magnetic card, and is an IC card reader if the recording medium is a contact type IC card. If the recording medium uses an RFID (Radio Frequency Identification), such as a non-contact type IC card or a smartphone, an RFID reader is used as the reader 47.

The near field communication unit 48 performs direct wireless communication to transmit and receive data to and from the near field communication unit 48 provided in another information processing apparatus 40. The near field communication unit 48 has a communication-enabled distance shorter than that of the wireless unit 44. It is desirable that the communication-enabled distance is adjusted to such an extent that the customers can easily talk with each other. The near field communication unit 48 may be, for example, an existing communication unit conforming to the IEEE 802.15.1 standard. The hardware of the server 10 may be, for example, a general-purpose network server. The hardware of the checkout apparatus 30 may be, for example, hardware in another existing checkout apparatus. The hardware of the information processing apparatus 40 may be, for example, a general-purpose tablet computer. The transfer of the server 10, the checkout apparatus 30 or the information processing apparatus 40 is generally performed in a state in which the information processing program for realizing the information processing for implementing operations of each apparatus is stored in the main memory 12, 32, 42 or the auxiliary storage unit 13, 33, 43. However, the hardware in a state in which the above-described information processing program is not stored in the main memory 12, 32, 42 or the auxiliary storage unit 13, 33, 43, or in a state in which an information processing program of the same type but in different version is stored in the main memory 12, 32, 42 or the auxiliary storage unit 13, 33, 43 may be separately transferred with respect to the above-described information processing program. Then, the server 10, the checkout apparatus 30 or the information processing apparatus 40 may be configured by writing the above-described information processing program to the main memory 12, 32, 42 or the auxiliary storage unit 13, 33, 43 in response to an operation by any worker. The transfer of the information processing program can be performed by being recorded on a removable recording medium such as a magnetic disk, a magneto-optical disk, an optical disk, a semiconductor memory or the like, or through communication via a network.

Next, the operation of the commodity sales system 100 is described. The information processing described below is merely an example, and an appropriately change in an order of a part of processing, omission of a part of processing or addition of another processing may be performed.

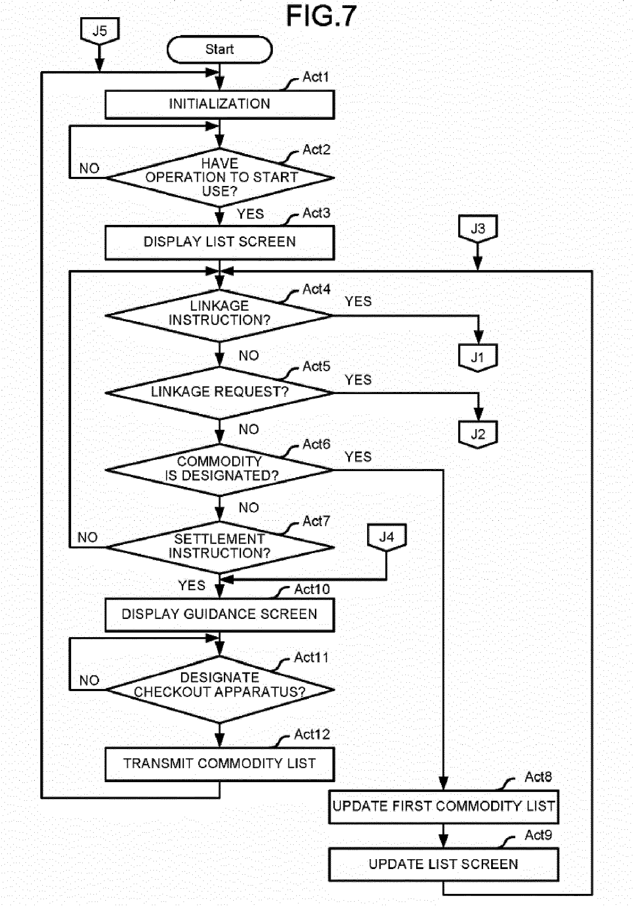

Fig. 7, Fig. 8 and Fig. 9 are flowcharts depicting the information processing executed by the information processing apparatus 40.

The processor 41 executes the information processing according to an information processing program stored in the main memory 42 or the auxiliary storage unit 43 when the information processing apparatus 40 is started.

The processor 41 performs initialization in Act 1. In the initialization, the processor 41 clears at least a first commodity list and a second commodity list. The first commodity list and the second commodity list indicate the registered commodities in a list form, and the data for the lists are stored in the main memory 42 or the auxiliary storage unit 43. Details of the first commodity list and the second commodity list are described below.

The processor 41 stands by until an operation for starting the apparatus is performed in Act 2. At this time, the processor 41 is in a state of waiting for the shopping to be started with a cart C on which the information processing apparatus 40 is mounted. The customer M1 takes out one of the carts C placed in a cart pool area and performs a predetermined operation to start shopping using the information processing apparatus 40 mounted thereon. For example, the processor 41 controls the touch panel 45 to display a screen showing a start button in the above-described standby state. Then, when the touch panel 45 detects that the start button is touched, the processor 41 determines that the operation for starting the use is performed. Then, if the operation for starting the use is performed, the processor 41 takes Yes, and proceeds to the processing in Act 3.

It is assumed that the cart POS service is provided for registered store members. In this case, for example, the processor 41 may take Yes in Act 2 if a regular operation for member login is performed. The regular operation for member login is, for example, an operation for controlling the reader 47 to read data such as a member ID recorded in the recording medium such as the membership card. Then, if it is determined that the member ID read by the reader 47 matches a member ID managed by, for example, the server 10, the processor 41 takes Yes in Act2.

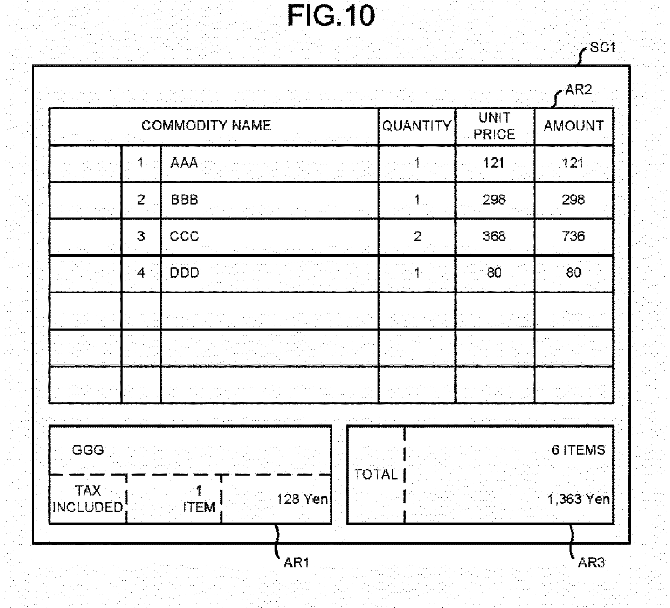

The processor 41 controls the touch panel 45 to display a list screen in Act 3. The list screen shows a list of the commodities to be purchased shown in the first commodity list and the second commodity list. However, at this point, both the first commodity list and the second commodity list are empty. For this reason, the list screen displayed shows only a predetermined basic form such as frame lines without displaying the information of the commodity. The customer M1 can be aware that the registration of the commodity is ready by viewing the list screen in the initial state. For example, the processor 41 may control the touch panel 45 to display a screen showing a message for instructing to start registering the commodity instead of displaying the empty list screen. Fig. 10 is a diagram illustrating the list screen SC1.

In Act 3, the processor 41 generates a list screen in which areas AR1, AR2 and AR3 are shown as shown in Fig. 10. In Fig. 10, in order to make it easy to understand information recorded in each area, the list screen in which several commodities are registered is shown.

The commodity name, the quantity, and the unit price of the most recently designated commodity are shown in an area AR1. Character strings "GGG", "1 item" and "128 Yen" indicate the commodity name, the quantity and the unit price, respectively.

Information relating to the commodity registered prior to the purchased commodity shown in the area AR1 is shown in the area AR2. For example, the character strings "AAA", "1", "121" and "121" displayed in the second line indicate the commodity name, the quantity, the unit price and the amount of the purchased commodity first designated, respectively.

A total number and a total amount of the registered purchased commodities are shown in the area AR3. For example, the character strings "6 items" and "1,363 Yen" indicate the total number and the total amount, respectively.

In Act 3, the processor 41 does not display any character string indicating the information relating to the purchased commodity as described above on the list screen. In Act 4, the processor 41 determines whether or not linkage is instructed. The detail of the linkage will be explained later. If the linkage is not instructed, the processor 41 takes No and proceeds to the processing in Act 5.

In Act 5, the processor 41 determines whether or not the linkage is requested. Then, if the linkage is not requested, the processor 41 takes No and proceeds to the processing in Act 6.

In Act 6, the processor 41 determines whether or not a commodity to be purchased is designated. Then, if the commodity is not designated, the processor 41 takes No and proceeds to the processing in Act 7.

In Act 7, the processor 41 determines whether or not a settlement is instructed. Then, if the settlement is not instructed, the processor 41 takes No and returns to the processing in Act 4.

Thus, in Act 4 to Act 7, the processor 41 stands by until any one of the instruction of linkage, the request of linkage, the designation of commodity and the instruction of settlement is performed.

While pushing the cart C, the customer M1 walks around in the retail store to look for a commodity to be purchased. If the customer M1 finds the commodity to be purchased, he/she takes out the commodity from a display area thereof to put it in the cart C. At this time, the customer M1 uses the scanner 46 to read the code symbol attached to the corresponding commodity, or operates the touch panel 45 for inputting the corresponding commodity to designate the commodity as the commodity to be purchased. Then, the processor 41 takes Yes in Act 6 and proceeds to the processing in Act 8.

In Act 8, the processor 41 updates the first commodity list to display the designated commodity as the commodity to be purchased. For example, the processor 41 adds the commodity code of the designated commodity to the first commodity list.

In Act 9, the processor 41 updates the list screen displayed on the touch panel 45. Specifically, the processor 41 updates the list screen to reflect the contents of the first commodity list updated as described above. Then, the processor 41 returns to the standby state in Act 4 to Act 7.

When the customer M1 comes to the retail store together with another customer M1 and the customers M1 collectively perform settlement on commodities after separately shopping in the retail store, a support function described below can be used. Hereinafter, one of the two customers M1 is referred to as a main customer M1m, and the other is referred to as a sub customer M1s. It is assumed that the customer M1 who performs the settlement is the main customer M1m. If it is necessary to distinguish between the cart C and the information processing apparatus 40 used by the main customer M1m and the cart C and the information processing apparatus 40 used by the sub customer M1s, the former ones are referred to as a main cart Cm and a main apparatus 40m, and the latter ones are referred to as a sub cart Cs and a sub apparatus 40s. Furthermore, if it is necessary to distinguish between the processor 41 provided in the main apparatus 40m and the processor 41 provided in the sub apparatus 40s, the former is referred to as a main processor 41m, and the latter is referred to as a sub processor 41s. It is also assumed that the main apparatus 40m is operated by the mother and her daughter, and the sub apparatus 40s is operated by the father and his son. In this case, both the mother and her daughter who operate the main apparatus 40m are the customers M1m. Both the father and his son who operate the sub apparatus 40s are the customers M1s. In other words, all the customers M1 who operate the main apparatus 40m are the main customers M1m. All the customers M1 who operate the sub apparatus 40s are the sub customers M1s. The sub customer M1s is equivalent to a first customer.

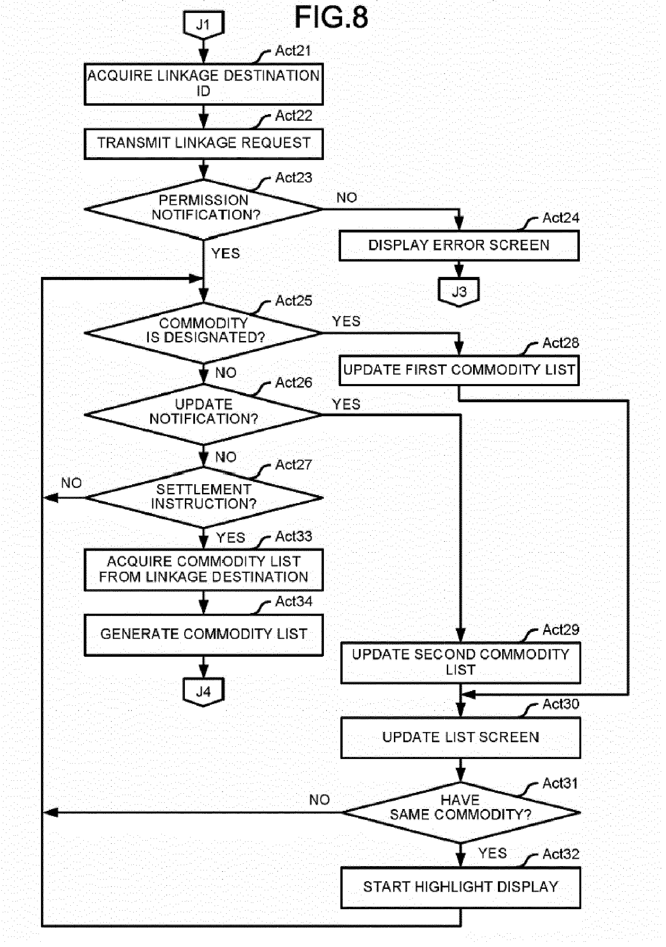

The main customer M1m performs a predetermined operation for instructing linkage through the main apparatus 40m in a situation in which the main cart Cm and the sub cart Cs are close to each other. For example, the main processor 41m displays a linkage button on the touch panel 45 of the main apparatus 40m separately from the list screen. Then, the main customer M1m touches the linkage button as the above-described operation. If the linkage is instructed in this way, the main processor 41m takes Yes in Act 4 and proceeds to the processing in Act 21 in Fig. 8.

The processor 41 acquires a linkage destination ID in Act 21. The linkage destination ID is a code for identifying the sub apparatus 40s. For example, the main processor 41m controls the touch panel 45 to display a GUI screen for receiving an input of the linkage destination ID. As the linkage destination ID, any code may be used as long as it can be identified by the information processing apparatus 40, but in the present embodiment, the cart number is used. Different cart numbers are assigned to the carts C, and the cart numbers are shown on the carts C. The main customer M1m inputs the cart number shown on the sub cart Cs on the above-described GUI screen. Then, the main processor 41m acquires the input cart number as the linkage destination ID. The main processor 41m stores the acquired linkage destination ID in the main memory 42 or the auxiliary storage unit 43 of the main apparatus 40m.

The cart number may be input by the reader 47 of the main apparatus 40m reading a barcode, attached to the sub cart Cs, indicating the cart number. The barcode may be displayed by attaching a label on which the barcode is printed to each cart C, or may be displayed on the touch panel 45.

In Act 22, the main processor 41m transmits a linkage request through the near field communication unit 48 of the main apparatus 40m to the information processing apparatus 40 identified by the linkage destination ID. The linkage request is data for requesting the sub apparatus 40s for the linkage, and includes a unique command assigned to the request, a cart number of the transmission source, and the like. The cart number and the ID of the near field communication unit 48 may be the same, but in that case, the process for the main customer M1m to specify the linkage destination ID becomes complicated. Therefore, the cart number is preferably different from the ID of the near field communication unit 48. In this case, a data table for storing the cart number and the ID of the near field communication unit 48 in an associated manner is prepared in advance. Then, the main processor 41m only needs to refer to the data table to acquire the ID of the near field communication unit 48, i.e., destination of the linkage request. The data table may be stored in the main memory 42 or the auxiliary storage unit 43 of the information processing apparatus 40, or may be stored in any other storage device such as the main memory 12 or the auxiliary storage unit 13 of the server 10.

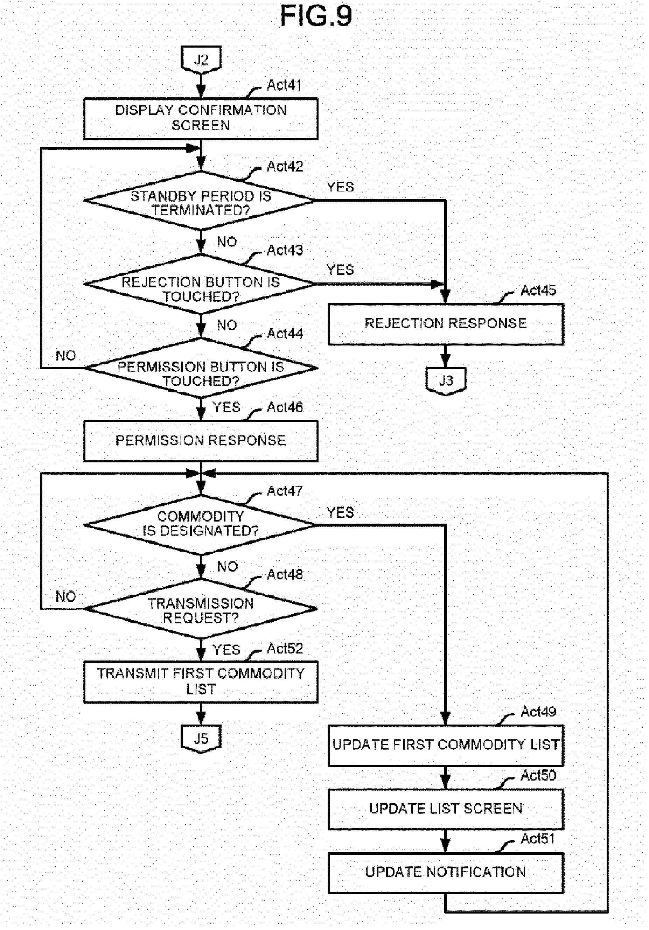

In a case in which a separation distance between the main cart Cm and the sub cart Cs is equal to or less than the communication-enabled distance of the near field communication unit 48, the linkage request is certainly received by the near field communication unit 48 of the sub apparatus 40s. The sub apparatus 40s is already started to be used by the sub customer M1s, and thus the sub processor 41s also executes the information processing shown in Fig. 7 to Fig. 9. Then, when the linkage request is received as described above, the sub processor 41s takes Yes in Act 5 in Fig. 7 and proceeds to the processing in Act 41 in Fig. 9.

In Act 41, the sub processor 41s controls the touch panel 45 of the sub apparatus 40s to display a confirmation screen. The confirmation screen shows the cart number included in the linkage request, and shows a message for instructing the sub customer M1s to confirm whether or not the linkage with the cart C identified by the cart number is permitted. The confirmation screen shows two buttons for designating permission and rejection.

When the sub customer M1s confirms from the confirmation screen that the request source of the linkage request is the main cart Cm, the sub customer M1s touches a permission button. On the other hand, if the sub customer M1s intends not to accept the linkage request for some reason, the sub customer M1s touches a rejection button. If the customer who uses the cart C has no idea about the linkage request, for example, if the cart C used by a customer different from the sub customer M1s is mistakenly designated and a confirmation screen is displayed on the cart C, the customer touches the rejection button.

In Act 42, the sub processor 41s determines whether or not the standby period is terminated. Then, if the sub processor 41s is still in the standby period, the sub processor 41s takes No and proceeds to the processing in Act 43. The standby period may be set to be any period by a designer or an administrator of the information processing apparatus 40. For example, it is assumed that the standby period starts at a time at which the confirmation screen is displayed in Act 41 and ends at a time after a predetermined period of time, determined by the designer or the administrator, elapses. In Act 43, the sub processor 41s determines whether or not the rejection button is touched. Then, the sub processor 41s takes No if the rejection button is not touched, and proceeds to the processing in Act 44.

In Act 44, the sub processor 41s determines whether or not the permission button is touched. Then, if the permission button is not touched, the sub processor 41s takes No and returns to the processing in Act 42.

Thus, in Act 42 to Act 44, the sub processor 41s stands by until the rejection button or the permission button is touched before the end of the standby period.

If the sub customer M1s does not become aware of the display of the confirmation screen, or if the sub customer M1s has no idea how to deal with the display of the confirmation screen, he/she may leave the display of the confirmation screen without touching either the rejection button or the permission button. If the main customer M1m inputs a wrong cart number as the linkage destination ID unintentionally, and the linkage request is transmitted to a cart C different from the sub cart Cs, the display of the confirmation screen may be ignored with neither the rejection button nor the permission button being touched. Then, in such a case, if the standby period is terminated in a state in which the permission button or the rejection button is not touched, the sub processor 41s takes Yes in Act 42, and proceeds to the processing in Act 45.

On the other hand, if the customer M1 who uses the cart C serving as the request destination touches the rejection button as described above, the sub processor 41s takes Yes in Act 43, and proceeds to the processing in Act 45.

In Act 45, the sub processor 41s transmits a rejection response from the near field communication unit 48 to the main apparatus 40m. The rejection response refers to data for notifying that the linkage request is rejected, and includes a unique command assigned to this notification, the cart number of the transmission source, and the like. Then, the sub processor 41s returns to the standby state in Act 4 to Act 7 in Fig. 7.

If the sub customer M1s touches the permission button within the standby period, the sub processor 41s takes Yes in Act 44, and proceeds to the processing in Act 46. In this case, the sub processor 41s stores the cart number included in the linkage request as the cart number of the main cart Cm being linked in the main memory 42 or the auxiliary storage unit 43 of the sub apparatus 40s.

In Act 46, the sub processor 41s transmits the permission response from the near field communication unit 48 to the main apparatus 40m. The permission response is data for notifying the permission to the linkage request, and includes a unique command assigned to this notification, the cart number of the transmission source, and the like. After transmitting the linkage request in Act 22 in Fig. 8, the main processor 41m proceeds to the processing in Act 23.

In Act 23, the main processor 41m determines whether or not the permission notification is received. If the rejection response transmitted from the near field communication unit 48 of the sub apparatus 40s is received by the near field communication unit 48 of the main apparatus 40m as described above, the main processor 41m takes No in Act 23, and proceeds to the processing in Act 24. The main processor 41m also takes No in Act 23 if neither the permission notification nor the rejection notification is received when a predetermined period of time elapses from a time at which the linkage request is transmitted.

In Act 24, the main processor 41m controls the touch panel 45 of the main apparatus 40m to display an error screen. The error screen notifies the main customer M1m that the linkage with the designated sub cart Cs cannot be set up. Then, the main processor 41m returns to the standby state in Act 4 to Act 7 in Fig. 7.

The main processor 41m takes Yes in Act 23 if the permission response transmitted from the near field communication unit 48 of the sub apparatus 40s is received by the near field communication unit 48 of the main apparatus 40m as described above, and proceeds to the processing in Act 25.

In Act 25, the main processor 41m determines whether or not the commodity to be purchased is designated. Then, the main processor 41m takes No if no commodity is designated, and proceeds to the processing in Act 26.

In Act 26, the main processor 41m determines whether or not the update is notified. Then, the main processor 41m takes No if the update is not notified, and proceeds to the processing in Act 27.

In Act 27, the main processor 41m determines whether or not the settlement is instructed. Then, the main processor 41m takes No if the settlement is not instructed, and returns to the processing in Act 25.

Thus, in Act 25 to Act 27, the main processor 41m stands by until the designation of the commodity, the notification of the update, or the instruction of the settlement is performed.

If the main customer M1m designates the commodity on the main apparatus 40m in the same manner as described above, the main processor 41m takes Yes in Act 25 and proceeds to the processing in Act 28.

In Act 28, the main processor 41m updates the first commodity list to include the designated commodity as the commodity toe be purchased. The first commodity list updated by the main processor 41m is stored in the main memory 42 or the auxiliary storage unit 43 of the main apparatus 40m.

The commodity designated by the main customer M1m is a commodity that the main customer M1m intends to purchase. The data set in each field of the data record R1 in the first commodity list stored in the main memory 42 or the auxiliary storage unit 43 of the main apparatus 40m relates to the commodity that the main customer M1m intends to purchase. Then, the main processor 41m updates the first commodity list to store information relating to the commodity that the main customer M1m intends to purchase.

On the other hand, the sub processor 41s proceeds to the processing in Act 47 after transmitting the permission response in Act 46 in Fig. 9.

In Act 47, the sub processor 41s determines whether or not the commodity is designated. Then, the sub processor 41s takes No if no commodity is designated, and proceeds to the processing in Act 48.

In Act 48, the sub processor 41s determines whether or not transmission of the commodity list is requested. Then, if the transmission is not requested, the sub processor 41s takes No and returns to the processing in Act 47.

In this way, the sub processor 41s stands by until the commodity is designated or the transmission of the commodity list is requested in Act 47 and Act 48.

If the sub customer M1s designates the commodity on the sub apparatus 40s in the same manner as described above, the sub processor 41s takes Yes in Act 47, and proceeds to the processing in Act 49.

In Act 49, the sub processor 41s updates the first commodity list to include the designated commodity as the commodity to be purchased. The first commodity list updated by the sub processor 41s is stored in the main memory 42 or the auxiliary storage unit 43 of the sub apparatus 40s.

The purchased commodity designated by the sub customer M1s is a commodity that the sub customer M1s intends to purchase. The data set in each field of the data record R1 in the first commodity list stored in the main memory 42 or the auxiliary storage unit 43 of the sub apparatus 40s relates to the commodity that the sub customer M1s intends to purchase. Then, the sub processor 41s updates the first commodity list to store the information relating to the commodity that the sub customer M1s intends to purchase.

In Act 50, the sub processor 41s updates the list screen displayed on the touch panel 45 of the sub apparatus 40s. At the time of updating the list screen by the sub processor 41s, a form of the list screen remains as a form (shown in Fig. 10) displayed in Act 3. In other words, the sub processor 41s updates the list screen in such a manner that the information relating to the purchased commodity designated this time is shown in the area AR1, and the information relating to the purchased commodity designated last time is shown in the area AR2.

In Act 51, the sub processor 41s transmits an update notification through the wireless unit 44 of the sub apparatus 40s to the main apparatus 40m. Specifically, the sub processor 41s transmits the update notification to the information processing apparatus 40 identified by the cart number of the main cart Cm being linked which is stored in the main memory 42 or the auxiliary storage unit 43 of the sub apparatus 40s. The update notification is data for notifying the main apparatus 40m that the first commodity list in the sub apparatus 40s is updated, and includes a unique command assigned to this notification. The update notification includes the updated data record R1 for the commodity added this time. Then, the sub processor 41s returns to the standby state in Act 47 and Act 48.

However, the sub processor 41s may not include a part of the data included in the first commodity list in the update notification. For example, the processor 41a may include only the commodity code in the update notification among the data included in the updated data record R1.

Thus, the transmission of the update notification is transmission of all or a part of the information to the main apparatus 40m.

The update notification is transmitted to the main apparatus 40m via the access point 70 and the communication network 60, and is received by the wireless unit 44 of the main apparatus 40m. Then, the main processor 41m takes Yes in Act 26 in Fig. 8 and proceeds to the processing in Act 29.

In Act 29, the main processor 41m updates the second commodity list to include the commodity identified by the commodity code included in the update notification as the purchased commodity. At this time, the main processor 41m acquires the information relating to the commodity that the sub customer M1s intends to purchase through the wireless unit 44. The main processor 41m updates a second commodity list stored in the main memory 42 or the auxiliary storage unit 43 of the main apparatus 40m. The second commodity list stored in the main memory 42 or the auxiliary storage unit 43 of the main apparatus 40m is a copy of the first commodity list stored in the main memory 42 or the auxiliary storage unit 43 of the sub apparatus 40s. In other words, the contents of the second commodity list are identical to those of the first commodity list.

If the update notification includes only the commodity code as described above, the main processor 41m may access the commodity database using the commodity code as a key to acquire information such as the commodity name and the like from the commodity database, and store the acquired information in the second commodity list. A storage location of the commodity database is not limited, and may be, for example, the main memory 42 or the auxiliary storage unit 43 of the information processing apparatus 40, or the main memory 12 or the auxiliary storage unit 13 of the server 10.

If the main processor 41m updates the first commodity list or the second commodity list in Act 28 or Act 29, thereafter, the main processor 41m proceeds to the processing in Act 30.

The main processor 41m updates the list screen displayed on the touch panel 45 in Act 30. Specifically, when the processing in the Act 30 is executed for the first time, the main processor 41m also updates the form of the list screen.

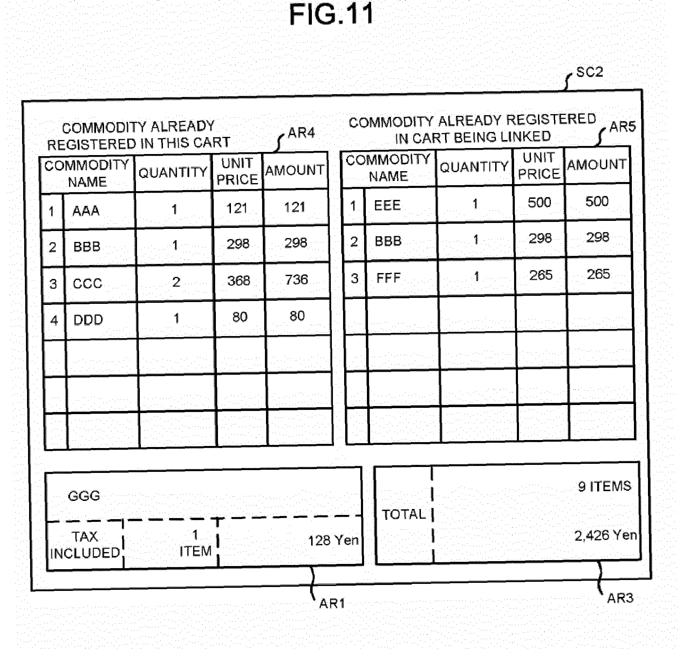

Fig. 11 is a diagram illustrating a form of the list screen SC2.

The list screen SC2 is shown in FIG. 11 after being updated in the processing in Act 30 by the main processor 41m. In Fig. 11, the same display elements as in Fig. 10 are denoted with the same reference numerals, and the detailed description thereof is omitted. In Fig. 11, in order to make it easy to understand information recorded in each area, the list screen SC2 in which a plurality of commodities are already registered is shown.

The list screen SC2 includes areas AR1, AR3, AR4 and AR5. In other words, the list screen SC2 includes the areas AR4 and AR5 instead of the area AR2 in the list screen SC1, in addition to areas AR1 and AR3.

In the area AR4, information relating to the commodity already registered prior to the commodity shown in the area AR1 is shown among the commodities shown in the first commodity list stored in the main memory 42 or the auxiliary storage unit 43 of the main apparatus 40m. The information shown in the area AR4 is the same as that shown in the area AR2.

In the area AR5, information relating to the commodity shown in the second commodity list stored in the main memory 42 or the auxiliary storage unit 43 of the main apparatus 40m is shown in the same form as in the area AR2 on the list screen SC1. If the sub processor 41s transmits only a part of the data included in the first commodity list as described above, the main processor 41m displays only the received data in the area AR5.

The main processor 41m displays a total quantity and a total amount of the commodities registered in the first commodity list and the second commodity list in the area AR3 on the list screen SC2.

As described above, the list screen SC2 is used for notifying the main customer M1m of all or a part of the information relating to the commodity that the sub customer M1s intends to purchase. Thus, the display of the list screen SC2 on the touch panel 45 is an example of a notification operation for performing the above notification, and the touch panel 45 is an example of a device performing the notification operation.

In Act 31, the main processor 41m determines whether or not the same commodity is included both in the first commodity list and the second commodity list stored in the main memory 42 or the auxiliary storage unit 43 of the main apparatus 40m. Then, the main processor 41m takes Yes if the same commodity is present, and proceeds to the processing in Act 32.

In Act 32, the main processor 41m starts a highlight display. The highlight display refers to display of the information relating to the same commodity on the list screen SC2 in a highlighting manner against the information relating to the other commodities. In Fig. 11, the commodity of which the commodity name is "BBB" is the same commodity. Then, the main processor 41m emphasizes "BBB" by showing each character in the character string "BBB" in italics against the commodity names of other commodities. However, the main processor 41m performs flickering, change in a display color, change in a type of a frame line, change in thickness of the frame line, change in character font, change in character size and the like singly or in a combined manner as the highlight display. However, the highlight display may be any display as long as it can achieve the above purpose and the same effect. Thereafter, the main processor 41m returns to the standby state in Act 25 to Act 27. If no same commodity is present, the main processor 41m takes No in Act 31 and returns to the standby state in Act 25 to Act 27. Therefore, the processing in Act 32 described above is not executed.

When the main customer M1m finishes the shopping and performs checkout, the main customer M1m meets the sub customer M1s and then performs a predetermined operation for instructing settlement. For example, the main processor 41m controls the touch panel 45 of the main apparatus 40m to display the settlement button on the touch panel 45 separately from the list screen. Then, the main customer M1m touches the settlement button as the above-described operation. When the settlement is instructed in this manner, the main processor 41m takes Yes in Act 27 and proceeds to the processing in Act 33.

In Act 33, the main processor 41m acquires the commodity list from the sub apparatus 40s being linked. Specifically, the main processor 41m transmits the transmission request through the near field communication unit 48 of the main apparatus 40m to the information processing apparatus 40 identified by the linkage destination ID stored in the main memory 42 or the auxiliary storage unit 43 of the main apparatus 40m. The transmission request is data for requesting transmission of the commodity list, and includes a command previously assigned to the request, the cart number of the transmission source, and the like.

The transmission request is received by the near field communication unit 48 of the sub apparatus 40s. Based on the request, the sub processor 41s takes Yes in Act 48 in Fig. 9, and proceeds to the processing in Act 52 in Fig. 9.

In Act 52, the sub processor 41s transmits the first commodity list stored in the main memory 42 or the auxiliary storage unit 43 of the sub apparatus 40s to the main apparatus 40m transmitting the transmission request through the near field communication unit 48 of the sub apparatus 40s. Thereafter, the sub processor 41s returns to the processing in Act 1 in Fig. 7. In other words, the sub apparatus 40s returns to the standby state until the shopping is newly started with the sub cart Cs on which the sub apparatus 40s is mounted.

Then, in Act 33 in Fig. 8, when the first commodity list transmitted as described above is received through the near field communication unit 48 of the main apparatus 40m, the main processor 41m acquires the transmitted first commodity list as the commodity list of a linkage destination.

As described above, by using the near field communication unit 48 in the main apparatus 40m to acquire the first communication list stored in the sub apparatus 40s, the first commodity list stored in the sub apparatus 40s can be acquired by the main apparatus 40m on condition that the main apparatus 40m and the sub apparatus 40s are close to each other, i.e., that the main customer M1m and the sub customer M1s meet each other as described above. However, the first commodity list may be acquired through the wireless unit 44.

In Act 34, the main processor 41m generates a new commodity list including commodities included in the first commodity list stored in the main memory 42 or the auxiliary storage unit 43 of the main apparatus 40m and commodities included in the first commodity list acquired from the sub apparatus 40s in Act 33. Thereafter, the main processor 41m proceeds to the processing in Act 10 in Fig. 7.

On the other hand, if the processor 41 of the information processing apparatus 40 not linked with the other information processing apparatuses 40 receives the instruction of the settlement as described above in the standby state in Act 4 to Act 7 in Fig. 7, the processor 41 takes Yes in Act 7, and proceeds to the processing in Act 10.

The processing subsequent to that in Act 10 is common in both a case in which the sub processor 41s proceeds to the processing in Act 10 from Act 7 and a case in which the main processor 41m proceeds to the processing in Act 10 from Act 34, there is no need to distinguish between the main processor 41m and the sub processor 41s. Therefore, in the following description, the processing is performed by the processor 41. The processor 41 controls the touch panel 45 to display a guidance screen in Act 10. The guidance screen is used for guiding procedures for shifting to the settlement in the checkout apparatus 30.

The processor 41 stands by until the checkout apparatus 30 is designated in Act 11.

The customer M1 moves to the checkout zone G2 while pushing the cart C that he/she uses at the time no linkage is made or pushing the main cart Cm and the sub cart Cs at the time the linkage is made. Then, the customer M1 uses the scanner 46 to scan a code symbol, shown on a settlement guidance screen displayed on the touch panel 35 of the checkout apparatus 30 in an idle state, according to the guidance on the guidance screen. The processor 31 of the checkout apparatus 30 in the idle state controls the touch panel 35 to display the settlement guidance screen. The settlement guidance screen displays the code symbol indicating information for accessing the corresponding checkout apparatus 30 via the communication network 60.

When the code symbol is scanned by the scanner 46, the processor 41 takes Yes in Act 11 and proceeds to the processing in Act 12.

In Act 12, the processor 41 accesses the checkout apparatus 30 from the wireless unit 44 via the access point 70 and the communication network 60 according to the information indicated by the above code symbol to transmit the commodity list. The processor 41 transmits the first commodity list stored in the main memory 42 or the auxiliary storage unit 43 in a case in which the processor 41 proceeds to the processing in Act 10 from Act 7, or transmits the commodity list generated in Act 34 in a case in which the processor 41 proceeds to the processing in Act 10 from Act 34. The processor 41 then returns to the processing in Act 1 in Fig. 7. In other words, the information processing apparatus 40 returns to the standby state until a new shopping with the cart C on which the information processing apparatus 40 is mounted is started.

When the commodity list is transmitted via the communication network 60 to the checkout apparatus 30, the communication interface 38 of the checkout apparatus 30 receives the commodity list. Then, the processor 31 of the checkout apparatus 30 calculates a settlement amount relating to all the registered commodities contained in the commodity list, and performs a settlement processing for the calculated settlement amount. The settlement processing may be, for example, the same as that performed by a checkout apparatus of an existing semi-self-service checkout system.

The processor 31 of the checkout apparatus 30 may take the commodity list out of the information processing apparatus 40. For example, the code symbol indicating information for accessing the information processing apparatus 40 via the communication network 60 is displayed on the touch panel 45 of the information processing apparatus 40. When the code symbol is scanned by a scanner of the checkout apparatus 30, the processor 31 of the checkout apparatus 30 accesses the information processing apparatus 40 according to the information indicated by the code symbol. Then, the information processing apparatus 40 transmits the commodity list to the checkout apparatus 30 in response to the access. Alternatively, when a selection button displayed on the touch panel 45 is touched, the processor 41 may transmit the commodity list to the checkout apparatus 30 corresponding to the selection button. Further, if the processor 41 transmits the commodity list to one of the checkout apparatuses 30 and the checkout apparatus 30 is able to start settlement processing, the processor 31 of the checkout apparatus 30 may acquire the commodity list. In this case, however, the processor 31 transfers the commodity list to another checkout apparatus 30 if the checkout apparatus 30 to which the commodity list is transmitted cannot start the settlement processing because the checkout apparatus 30 of the transmission destination already starts the settlement processing for another commodity list earlier transmitted. As described above, in the main apparatus 40m, a state of designating the commodities in the sub apparatus 40s is displayed. Therefore, according to the commodity sales system 100 of the present embodiment, the main customer M1m can be notified of a state of registering the commodities by the sub customer M1s who walks around in the retail store separately.

In the main apparatus 40m, the list screen SC2 showing a list of commodities already registered by the sub customer M1s is displayed. In this way, the main customer M1m can easily grasp the commodities already registered by the sub customer M1s. The main customer M1m can avoid unnecessary purchase.

Such avoidance of unnecessary purchase temporarily becomes a loss in sales as for the retail store side. However, the customer who is provided with the service achieving the above effect can have a motivation to come to the retail store repeatedly, which may lead to an increase in sales in the future.

The main apparatus 40m is notified of the commodity registration in the sub apparatus 40s through communication by the communication network 60 via the access point 70. Therefore, the above notification can be made regardless of a distance between the sub apparatus 40s and the main apparatus 40m in the retail store. Since the communication for establishing the linkage between the main apparatus 40m and the sub apparatus 40s is directly performed via the near field communication, establishing of the linkage cannot be performed unless the main apparatus 40m and the sub apparatus 40s are in close proximity with each other within a communication-enabled distance for the near field communication. For this reason, establishing of the linkage is performed on condition that the main customer M1m and the sub customer M1s directly meet each other for confirmation, and thus establishing of the linkage by mistake between the information processing apparatuses 40 respectively used by unrelated customers can be prevented.

The main apparatus 40m creates a commodity list including both the commodity registered with the main apparatus 40m and the commodity registered with the sub apparatus 40s, and requests the checkout apparatus 30 to perform the checkout accompanying with the transmission of the commodity list. The sub apparatus 40s transmits the commodity list including the commodity registered with the sub apparatus 40s to the main apparatus 40m so as to create the above-described commodity list, but the sub apparatus 40s does not request the checkout apparatus 30 to perform the checkout. In this way, the settlement of the commodity registered with the main apparatus 40m and the commodity registered with the sub apparatus 40s is collectively performed. Since the checkout is performed in response to the request only from the main apparatus 40m, it is assumed that a person who performs the settlement is usually the main customer M1m. Furthermore, the customer M1 who instructs the setting of linkage is also the main customer M1m. In other words, the customer who instructs establishing of the linkage also needs to perform settlement of the purchased commodity registered by another customer relevant to the linkage, and thus the linkage function inappropriately used due to mischief or the like can be avoided.

The main apparatus 40m displays the information relating to the commodity redundantly registered in both the main apparatus 40m and the sub apparatus 40s in a highlighting manner. For this reason, the main customer M1m can easily recognize the presence and the category of a redundantly registered commodity without looking at the display excessively.

The main apparatus 40m displays the list screen SC2 simultaneously showing the list of the commodities registered with the main apparatus 40m and the list of the commodities registered with the sub apparatus 40s. Therefore, the main customer M1m can easily confirm the registration states of the commodities in both the main apparatus 40m and the sub apparatus 40s.

The present embodiment is modified in various ways as follows.

The commodity list may be created in the server 10. In this case, the information processing apparatus 40 notifies the server 10 of a designated or registered commodity. Specifically, the information processing apparatus 40 transmits, for example, a commodity code assigned to the designated commodity to the server 10. Then, the processor 11 of the server 10 creates a commodity list based on the received commodity code. The commodity list is stored in the main memory 12 or the auxiliary storage unit 13. In other words, the processor 11 may execute an information processing to function as at least one of the first creating module and the second creating module.

The payment amount may be calculated by the information processing apparatus 40 or the server 10. In this case, the processor 31 of the checkout apparatus 30 may only have a function of performing settlement for the payment amount calculated by the information processing apparatus 40 or the server 10 instead of the checkout apparatus 30, in other words, may only perform a processing relating to settlement in the checkout processing. However, in this case, the checkout apparatus 30 performs only the settlement processing within the calculation processing and the settlement processing for the payment amount included in the checkout processing, and is also referred to as a settlement apparatus.

The sub apparatus 40s may display the registration state of the commodity in the main apparatus 40m. In this case, for example, the main processor 41m may transmit an update notification to the sub apparatus 40s in the same manner as in Act 51 after performing the processing in Act 28 in Fig. 8. Further, for example, in the standby state in Act 47 and Act 48 in Fig. 9, the sub processor 41s also stands by until the update notification is transmitted from the main processor 40m. Then, when the update notification is transmitted, the sub processor 41s further performs the same processing as in Act 29 to Act 32 in Fig. 8, and then returns to the above-described standby state. The main processor 41m may omit the processing in Act 33 in Fig. 8, and generate, in Act 34, a new commodity list including commodities respectively contained in the first commodity list and the second commodity list stored in the main memory 42 or the auxiliary storage unit 43 of the main apparatus 40m. In this case, it is desirable that a confirmation processing is performed by the main processor 41m and the sub processor 41s, and the update notification from the sub apparatus 40s to the main apparatus 40m is received without any omissions by the main apparatus 40m and reflected in the second commodity list.

The linkage request, the permission notification, and the rejection notification may be transmitted and received via the communication network 60 and the access point 70. In this case, the processor 41 may transmit the linkage request or the permission notification only when an distance between the main apparatus 40m and the sub apparatus 40s measured by an existing sensor is shorter than a predetermined reference distance. Alternatively, the linkage may be established regardless of the distance between the main apparatus 40m and the sub apparatus 40s.

The linkage between the main apparatus 40m and the sub apparatus 40s may be established by another method. For example, in response to an instruction from the main customer M1m, a barcode indicating the cart number of the main cart Cm is displayed on the touch panel 45 of the main apparatus 40m. Then, when the barcode is scanned by the reader 47 of the information processing apparatus 40, the processor 41 takes Yes in Act 5 in Fig. 7. Furthermore, the processor 41 does not perform the processing in Act 21 and Act 22. The processor 41 may omit the processing in Act 41 to Act 45 in Fig. 9. Part of the above-described information processing performed by the processor 41 may be omitted. For example, the processor 41 may omit the processing in Act 31 and Act 32 in Fig. 8 and return to the standby state in Act 25 to Act 27 from Act 30.

The main processor 41m may display a list screen in a form different from that of the list screen SC2.

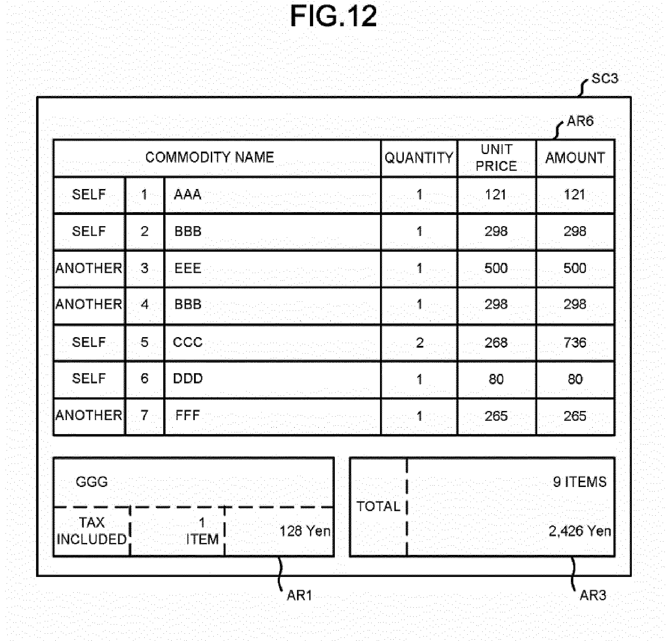

Fig. 12 is a diagram illustrating a modified list screen SC3. In Fig. 12, the same display elements as in Fig. 10 are denoted with the same reference numerals, and the detailed description thereof is omitted. In Fig. 12, in order to make it easy to understand information shown in each area, a display in which a plurality of commodities is already registered is shown.

The list screen SC3 includes areas AR1, AR3 and AR6. Specifically, the list screen SC3 shows the area AR6 in the list screen SC1, instead of the area AR2.

In the area AR6, information relating to the commodity registered prior to the commodity shown in the area AR1 among the purchased commodities shown in the first commodity list stored in the main memory 42 or the auxiliary storage unit 43 of the main apparatus 40m, and information relating to a commodity shown in the second commodity list stored in the main memory 42 or the auxiliary storage unit 43 of the main apparatus 40m are shown in the order of acquisition in the same form as in the area AR2 on the list screen SC1. However, in the area AR6, whether the information shown in each line is based on the first commodity list or based on the second commodity list is shown at the head of the corresponding line. In the example in Fig. 12, "self' indicates that the information is based on the first commodity list and "another" indicates that the information is based on the second commodity list. The processor 41m control the touch panel 45 to display a total quantity and a total amount of the purchased commodities registered in the first commodity list and the second commodity list in the area AR3 on the list screen SC3.

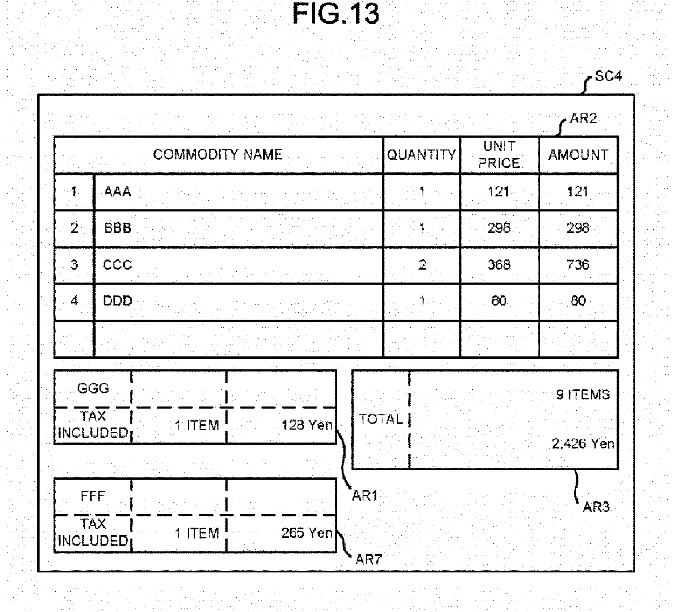

Fig. 13 is a diagram illustrating a modified list screen SC4. In Fig. 13, the same display elements as in Fig. 10 are denoted with the same reference numerals, and the detailed description thereof is omitted. In Fig. 13, in order to make it easy to understand information shown in each area, a display in which a plurality of commodities is already registered is shown.

The list screen SC4 includes areas AR1, AR2, AR3 and AR7. Specifically, the list screen SC4 further includes the area AR7 in addition to the areas shown on the list screen SC1.

In the area AR7, the commodity name, the quantity, and the unit price relating to the commodity most recently designated in the sub apparatus 40s are shown in the same way as in the area AR1.

The area AR1 in the list screen SC4 has a smaller number of lines on the list screen SC4 than on the list screen SC1 shown in Fig. 10 to secure a space in which the area AR7 is arranged, but the role of the area AR1 is common to both the list screen SC1 and the list screen SC4. The main processor 41m displays the total quantity and the total amount of the commodities registered in the first commodity list and the second commodity list in the area AR3 on the list screen SC4.

The main processor 41m may switch display of the list screens showing contents of the first commodity list and the second commodity list in the same form as the list screen SC1 shown in Fig. 10 each time a predetermined period of time elapses or each time the main customer M1m performs a predetermined operation.

The processor 11 of the server 10 may create the list screen.

The checkout based on the first commodity list generated by the main apparatus 40m and the checkout based on the first commodity list generated by the sub apparatus 40s may be performed separately.

The main processor 41m of the main apparatus 40m may acquire the first commodity list after being updated by the sub apparatus 40s each time a new commodity is registered in the sub apparatus 40s without creating the second commodity list.

The notification operation is not limited to the display on the touch panel 45, and may be display on another display device such as a display device of a portable information terminal possessed by the customer M1. Furthermore, the notification may be made by an operation other than the display, such as output of a voice message, for example. The main processor 41m or the sub processor 41s may transmit message data indicating a predetermined message or any other message to the information processing apparatus 40, i.e., linkage destination, via the wireless unit 44 in response to an instruction from the main customer M1m or the sub customer M1s. When the wireless unit 44 receives the message data transmitted as described above from the information processing apparatus 40, i.e., linkage destination, the main processor 41m or the sub processor 41s may display the message indicated by the message data on the touch panel 45. In this way, communication between the main customer M1m and the sub customer M1s separated from each other can be made.

The registered commodity may be designated in any method. For example, a commodity code may be read from a wireless tag attached to a commodity in the cart C, and the commodity identified by the commodity code may be registered as the purchased commodity. Alternatively, a commodity that the customer M1 picks up out of a commodity shelf may be specified through various sensors such as a camera for monitoring the behavior of the customer M1 and a camera for monitoring a display state of the commodity on the commodity shelf to register the commodity as the purchased commodity. It is assumed that the list screen is displayed on an information terminal such as a smartphone designated by the customer M1 in advance.

A part or all of functions performed by the processor 41 executing the information processing may be performed by hardware for executing an information processing not based on a program, such as a logic circuit or the like. Each of the above functions may also be performed by combining software control with the hardware such as the logic circuit described above.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A mobile terminal comprising:
a display,
an input device,
a network interface, and
a processor configured to
perform registration of one or more commodities to be purchased, control the display to display a first list of the registered commodities,
upon receipt of an input from the input device, control the network interface to transmit to another mobile terminal a request for a second list of one or more commodities registered by said another mobile terminal,
upon receipt of the second list, determine whether a first commodity included in the second list is also included in the first list, and
upon determining that the first commodity is included in the first list, control the display to update the displayed first list such that the first commodity is distinguished from the other commodities included in the first list.

2. The mobile terminal according to claim 1, wherein
the processor is further configured to:
upon receipt of a request for the commodities registered thereby from another mobile terminal, control the display to display a screen on which an input for accepting the request is received, and
upon acceptance of the request, transmit the first list to said another mobile terminal.

3. The mobile terminal according to claim 2, wherein
the processor is further configured to:
after the first list is transmitted, upon further registration of one or more commodities, update the first list and transmit the updated first list to said another mobile terminal.

4. The mobile terminal according to any one of claims 1 to 3, wherein
the processor is further configured to:
upon further receipt of a third list of one or more commodities registered by said another mobile terminal, determine whether a second commodity included in the third list is also included in the first list, and
upon determining that the second commodity is included in the first list, control the display to update the displayed first list such that both the first and second commodities are distinguished from the other commodities included in the first list.

5. The mobile terminal according to any one of claims 1 to 4, wherein
the processor is further configured to:
upon receipt of the second list, control the display to display both the first and second lists.

6. The mobile terminal according to claim 5, wherein
the processor is further configured to:
upon receipt of the second list, control the display to display an amount of payment for the commodities included in each of the first and second lists.

7. The mobile terminal according to any one of claims 1 to 6, wherein the processor is further configured to:
control the display to display a user interface through which an instruction to start a settlement for the registered commodities included in the first and second lists is received.

8. The mobile terminal according to any one of claims 1 to 7, wherein the mobile terminal is attached to a shopping cart.

9. The mobile terminal according to claim 8, wherein the request includes a unique ID assigned to the shopping cart to which said another mobile terminal is attached.

10. A shopping support system comprising:
a plurality of mobile terminals according to any one of claims 1 to 9, and
a settlement apparatus configured to perform settlement for the registered commodities included in the first and second lists.

11. A method for controlling a shopping support system including a plurality of mobile terminals, the method comprising:
performing registration of one or more commodities to be purchased;
displaying a first list of the registered commodities;
transmitting to another mobile terminal a request for a second list of one or more commodities registered by said another mobile terminal;
upon receipt of the second list, determining whether a first commodity included in the second list is also included in the first list; and
upon determining that the first commodity is included in the first list, updating the displayed first list such that the first commodity is distinguished from the other commodities included in the first list.

12. The method according to claim 11, further comprising:
upon receipt of a request for the commodities registered thereby from another mobile terminal, displaying a screen on which an input for accepting the request is received, and
upon acceptance of the request, transmitting the first list to said another mobile terminal.

13. The method according to claim 12, further comprising:
after the first list is transmitted, upon further registration of one or more commodities, updating the first list and transmitting the updated first list to said another mobile terminal.

14. A computer program comprising instructions which, when the program is executed by a computer, cause the computer to carry out the steps of the method according to any one of claims 11 to 13.

15. A computer-readable medium having stored thereon the computer program of claim 14.
